# EUROPEAN PATENT APPLICATION

(11) **EP 3 674 019 A1**
(43) Date of publication of application: **01.07.2020**
(21) Application number: 19219692.1
(22) Date of filing: 24.12.2019
(51) Int. Cl.: B22F 3/15, C22C 19/07, C22C 33/02, C22C 38/00, F16K 1/00, F16K 3/00, B23K 5/18, B23K 9/04, B23K 10/02, B23K 11/00, F01L 3/02, F01L 3/04, F16K 25/00, G21D 1/02

(54) **VALVE**

(30) Priority: 25.12.2018 JP 2018240888
(71) Applicant: KABUSHIKI KAISHA TOSHIBA, Minato-ku Tokyo (JP); Toshiba Energy Systems & Solutions Corporation, Saiwai-ku Kawasaki-shi Kanagawa (JP)
(72) Inventor: KOJIMA, Nobuo, Kanagawa (JP); ITABASHI, Hideaki, Kanagawa (JP)
(74) Representative: Moreland, David

(57) **Abstract**

A valve in an embodiment includes: a valve box in which valve box seat portions are provided; and a valve element on which valve element seat portions are provided. One of the valve box seat portion and the valve element seat portion is formed of a build-up material of a Co-based alloy and the other of the valve box seat portion and the valve element seat portion is formed of a build-up material of an Fe-based alloy. Then, a Vickers hardness of the build-up material of the Co-based alloy is larger than a Vickers hardness of the build-up material of the Fe-based alloy and a difference in the Vickers hardness between the build-up material of the Co-based alloy and the build-up material of the Fe-based alloy is HV50 or more.

## Description

### FIELD

The present invention relates to a valve.

### BACKGROUND

The valve to be used in atomic power plants includes a valve box seat portion to function as a valve seat in a valve box and a valve element seat portion to function as a valve seat on a valve element, and the valve box seat portion and the valve element seat portion are formed of a material excellent in abrasion resistance and erosion resistance.

The valve box seat portion and the valve element seat portion are formed of a build-up material of a Co-based alloy, for example. However, in this case, in the atomic power plant, the Co-based alloy comes into contact with high-temperature and high-pressure water, and thus a Co component is sometimes eluted into a reactor water from the Co-based alloy. Further, at the time of an opening and closing operation of the valve, the Co-based alloys slide on each other to be abraded, and thus the abraded Co component is sometimes mixed into the reactor water. The Co component turns into Co₆₀ being a radioisotope in a reactor core and Co₆₀ attaches to pieces of equipment such as a pipe and a turbine in some cases. As a result, in the working of a periodical inspection of a boiling water plant, it sometimes becomes difficult to reduce an exposure dose. Therefore, in order to reduce the amount of the Co component to enter the reactor water, using a cobalt-free material not containing a Co component has been considered.

For example, as the combination of the build-up material of the valve box seat portion and the build-up material of the valve element seat portion, for example, a combination of a Cr-Ni-Fe-based Fe base precipitation-type alloy and a Cr-Nb-Mo-Ni-based Ni base alloy has been proposed. However, in this case, it is impossible to easily execute a precipitation hardening heat treatment to be executed after welding of the build-up material.

Further, in the case where the build-up material of the valve box seat portion and the build-up material of the valve element seat portion both are the Ni base alloy, the both are the same in hardness, and thus it is difficult to suppress occurrence of the abrasion caused by sliding. In this case, in the boiling water plant, the attachment of Co₆₀ decreases, leading to a decrease in the exposure dose, but in a pressurized water plant, a Ni component attaches to a steam generator, and thus it is not easy to reduce the exposure dose in an inspection work of a steam generator.

Furthermore, when exchanging the valve box seat portion in a valve that has already been installed in the plant, it is necessary to exchange the entire value including a valve box. Therefore, there is a possibility that works such as a work to cut off the valve connected to a pipe and a welding work are required.

As described above, the abrasion resistance and the erosion resistance of the valve box seat portion and the valve element seat portion in the valve are not sufficient in some cases. Therefore, it is not easy to reduce the exposure dose in the inspection work and so on in the atomic power plant.

Thus, a problem to be solved by the present invention is to provide a valve excellent in sliding characteristics that is capable of improving abrasion resistance and erosion resistance of a valve box seat portion and a valve element seat portion.

### BRIEF DESCRIPTION OF THE DRAWINGS

FIG. 1 is a partial cross-sectional view schematically illustrating a configuration of a valve according to an embodiment;
FIG. 2 is a partial cross-sectional view illustrating a portion of the valve according to the embodiment in an enlarged manner;
FIG. 3 is a view illustrating measurement results of a friction coefficient after a sliding test in an example and comparative examples; and
FIG. 4 is a view illustrating results of an erosion test.

### DETAILED DESCRIPTION

A valve in an embodiment includes: a valve box in which valve box seat portions are provided; and a valve element on which valve element seat portions are provided. One of the valve box seat portion and the valve element seat portion is formed of a build-up material of a Co-based alloy and the other of the valve box seat portion and the valve element seat portion is formed of a build-up material of an Fe-based alloy. Then, a Vickers hardness of the build-up material of the Co-based alloy is larger than a Vickers hardness of the build-up material of the Fe-based alloy, and a difference in the Vickers hardness between the build-up material of the Co-based alloy and the build-up material of the Fe-based alloy is HV50 or more.

According to the present invention, it is possible to provide a valve excellent in sliding characteristics that is capable of improving abrasion resistance and erosion resistance of a valve box seat portion and a valve element seat portion.

### [A] Configuration of a valve 10

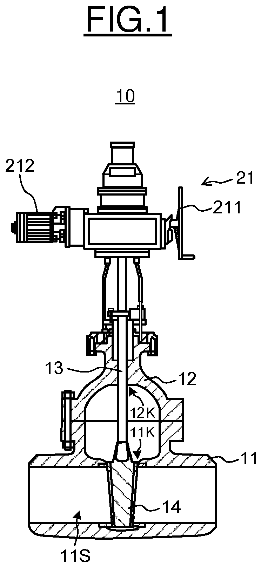

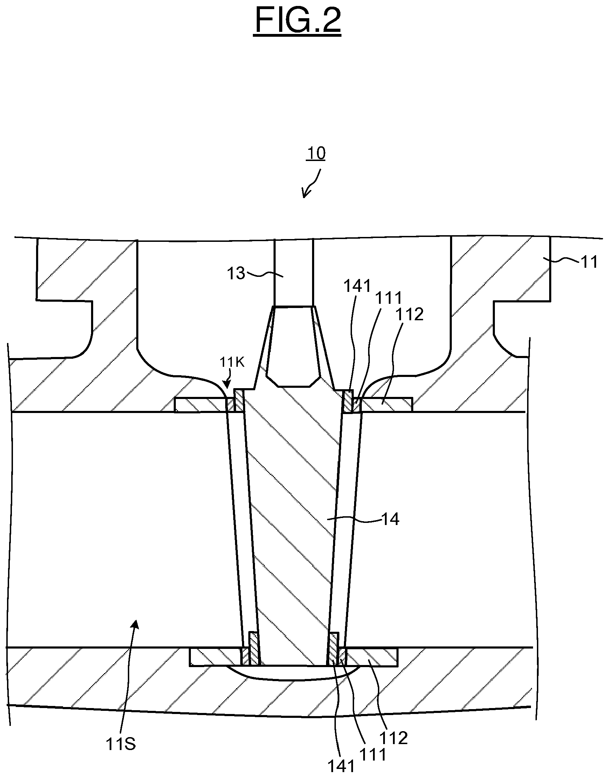

FIG. 1 is a partial cross-sectional view schematically illustrating a configuration of a valve 10 according to an embodiment. FIG. 2 is a partial cross-sectional view illustrating a portion of the valve 10 according to the embodiment in an enlarged manner. FIG. 1 and FIG. 2 each illustrate the case where the valve 10 is in a totally-closed state where the entire valve 10 is closed.

As illustrated in FIG. 1, the valve 10 is a sluice valve (gate valve) including a valve box 11, a valve cover 12, a valve rod 13, a valve element 14, and a valve driving device 21, and is used in, for example, a boiling water or pressurized water atomic power plant (its illustration is omitted). Respective components configuring the valve 10 will be explained sequentially.

### [A-1] Valve box 11

The valve box 11 includes, as illustrated in FIG. 1, an internal space 11S along a horizontal direction. The internal space 11S in the valve box 11 is a flow path through which fluid flows. Then, in a vertical direction, an opening 11K that communicates with the internal space 11S is formed at the upper side of the internal space 11S.

### [A-2] Valve cover 12

The valve cover 12 is, as illustrated in FIG. 1, placed on an upper portion of the valve box 11 and covers the opening 11K of the valve box 11. Here, in the valve cover 12, a through hole 12K passing through in the vertical direction is formed.

### [A-3] Valve rod 13

The valve rod 13, as illustrated in FIG. 1, passes through the through hole 12K of the valve cover 12 so as to extend in the vertical direction.

### [A-4] Valve element 14

The valve element 14 is, as illustrated in FIG. 1, placed at a lower end of the valve rod 13 in the vertical direction. Here, the valve element 14 passes through the opening 11K of the valve box 11.

### [A-5] Valve driving device 21

The valve driving device 21 is, as illustrated in FIG. 1, placed at an upper end of the valve rod 13 in the vertical direction. The valve driving device 21 includes a handle 211 and a motor 212 and executes an opening and closing operation of the valve 10 by moving the valve element 14 placed at the valve rod 13 in the vertical direction.

Concretely, when executing a closing operation of the valve 10, the valve driving device 21 moves the valve element 14 placed at the valve rod 13 downward, to thereby close the flow path being the internal space 11S. In contrast to this, when executing an opening operation of the valve 10, the valve driving device 21 moves the valve element 14 placed at the valve rod 13 upward, to thereby open the flow path being the internal space 11S.

### [B] Detailed configuration of the valve 10

### [B-1] Valve box seat portion 111

As illustrated in FIG. 2, in the valve box 11, valve box seat portions 111 are provided. The valve box seat portion 111 functions as a valve seat in the valve box 11. Here, the valve box seat portion 111 has an annular shape and is placed coaxially with the opening 11K, the through hole 12K (see FIG. 1), and the valve rod 13.

In this embodiment, two valve box seat portions 111 are provided in the valve box 11. Concretely, one valve box seat portion 111 is placed in an upper side portion of the internal space 11S and the other valve box seat portion 111 is placed in a lower side portion of the internal space 11S. Further, in this embodiment, the valve box seat portion 111 is formed on an inner surface of an annular member 112 and the annular member 112 is fixed to an inner surface of the valve box 11.

### [B-1] Valve element seat portion 141

Then, as illustrated in FIG. 2, on the valve element 14, valve element seat portions 141 are provided. The valve element seat portion 141 functions as a valve seat on the valve element 14. Here, the valve element seat portion 141 has an annular shape and is provided on an outer peripheral surface of the valve element 14.

In this embodiment, two valve element seat portions 141 are provided on the valve element 14. Concretely, one valve element seat portion 141 is placed on an upper side portion of the valve element 14 and the other valve element seat portion 141 is placed on a lower side portion of the valve element 14.

As illustrated in FIG. 2, in the case of the valve 10 being in a totally-closed state, an inner peripheral surface of the valve box seat portion 111 and an outer peripheral surface of the valve element seat portion 141 are in a close contact state. Therefore, when executing an opening and closing operation of the valve 10, the outer peripheral surface of the valve element seat portion 141 slides on the inner peripheral surface of the valve box seat portion 111.

### [C] Materials of the valve box seat portion 111 and the valve element seat portion 141

One of the valve box seat portion 111 and the valve element seat portion 141 is formed of a build-up material of a Co-based alloy. Then, the other of the valve box seat portion 111 and the valve element seat portion 141 is formed of a build-up material of an Fe-based alloy. That is, when the valve box seat portion 111 is formed of the build-up material of the Co-based alloy, the valve element seat portion 141 is formed of the build-up material of the Fe-based alloy. In contrast to this, when the valve element seat portion 141 is formed of the build-up material of the Co-based alloy, the valve box seat portion 111 is formed of the build-up material of the Fe-based alloy.

### [C-1] Composition of the Fe-based alloy

The build-up material being the Fe-based alloy preferably has a chemical composition composed of, for example, in mass percentage, Cr of 23.0% or more and 26.0% or less, Mo of 1.8% or more and 2.2% or less, Si of 3.1% or more and 3.5% or less, C of 1.10% or more and 1.35% or less, Ni of 3.7% or more and 5.0% or less, Mn of 4.0% or more and 5.0% or less, B of 0% or more and less than 0.002%, S of 0% or more and less than 0.01%, P of 0% or more and less than 0.020%, N of 0% or more and less than 0.18%, and the balance composed of Fe and inevitable impurities.

There will be explained the reason why the main chemical components of the Fe-based alloy are set to fall within the above-described ranges.

In the Fe-based alloy, Cr is a component necessary for maintaining corrosion resistance. However, when the content ratio of Cr increases excessively, abrasion resistance sometimes decreases. Therefore, the content ratio of Cr is set to fall within the above-described range.

In the Fe-based alloy, Si is added in order to improve hardness and abrasion resistance. However, when the content ratio of Si increases excessively, weld cracking sometimes occurs. Therefore, the content ratio of Si is set to fall within the above-described range.

In the Fe-based alloy, C is added in order to improve hardness and abrasion resistance and stabilize austenite. However, when the content ratio of C increases excessively, weld cracking susceptibility sometimes increases. Therefore, the content ratio of C is set to fall within the above-described range.

In the Fe-based alloy, Ni is added as an austenite stabilizing element, and effects of improving weldability and the like are obtained. However, when the content ratio of Ni increases excessively, decreases in hardness and abrasion resistance sometimes occur. Therefore, the content ratio of Ni is set to fall within the above-described range.

In the Fe-based alloy, Mn is added as an austenite stabilizing element. However, when the content ratio of Mn increases excessively, weld cracking susceptibility may be exhibited. Therefore, the content ratio of Mn is set to fall within the above-described range.

### [C-2] Composition of the Co-based alloy

As the Co-based alloy, for example, stellite (registered trademark) can be used. Concretely, the build-up material being the Co-based alloy preferably has a chemical composition composed of, for example, in mass percentage, Cr of 25.0% or more and 32.0% or less, Mo of 0% or more and 1.0% or less, Si of 0% or more and 2.0% or less, C of 0.70% or more and 1.40% or less, Ni of 0% or more and 3.0% or less, Fe of 0% or more and 5.0% or less, Mn of 0% or more and 2.0% or less, W of 3.0% or more and 6.0% or less, S of 0% or more and 0.03% or less, P of 0% or more and 0.03% or less, and the balance composed of Co and inevitable impurities.

### [D] Vickers hardness

### [D-1] Difference in Vickers hardness

In this embodiment, the Vickers hardness of the build-up material of the Co-based alloy is larger than that of the build-up material of the Fe-based alloy, and the difference in the Vickers hardness between the build-up material of the Co-based alloy and the build-up material of the Fe-based alloy is HV50 or more. The Vickers hardness can be found by a test method described in "JIS Z 2244: 2009 Vickers hardness test."

### [D-2] Vickers hardness of the build-up material of the Fe-based alloy

The build-up material of the Fe-based alloy preferably has a Vickers hardness of HV380 or more and HV400 or less. When the Vickers hardness is less than the lower limit value of the above-described range, abrasion is likely to occur in the build-up material of the Fe-based alloy, and thus the decrease in the abrasion resistance sometimes occurs. In contrast to this, when the Vickers hardness is greater than the upper limit value of the above-described range, abrasion is likely to occur in the build-up material of the Co-based alloy, and thus an abraded component of the Co-based alloy is sometimes mixed into the reactor water. Additionally, when the Vickers hardness of the build-up material of the Fe-based alloy is out of the above-described range, weld cracking or the like sometimes occurs when the Fe-based alloy is formed.

### [E] Manufacturing method

When the valve box seat portion 111 or the valve element seat portion 141 is formed of the build-up material of the Fe-based alloy, for example, a powder of the Fe-based alloy having the above-described chemical composition is used to execute a build-up operation. Here, the build-up operation is preferably executed by plasma transferred arc welding (PTA welding) or a hot isostatic pressing method (HIP method), for example.

Then, when the valve box seat portion 111 or the valve element seat portion 141 is formed of the build-up material of the Co-based alloy, for example, a powder of the Co-based alloy having the above-described chemical composition is used to execute a build-up operation. Here, the build-up operation is preferably executed by a gas build-up welding method, for example.

### [F] Summary

As above, in this embodiment, one of the valve box seat portion 111 and the valve element seat portion 141 is formed of the build-up material of the Co-based alloy. In contrast to this, the other of the valve box seat portion 111 and the valve element seat portion 141 is formed of the build-up material of the Fe-based alloy. Here, the Vickers hardness of the build-up material of the Co-based alloy is larger than that of the build-up material of the Fe-based alloy and the difference in the Vickers hardness between the build-up material of the Co-based alloy and the build-up material of the Fe-based alloy is HV50 or more.

Therefore, in this embodiment, in an opening and closing operation of the valve 10, the Fe-based alloy is mainly abraded, and thus the abrasion of the Co-based alloy is suppressed, which will be described in detail later. This makes it possible to suppress mixing of the Co component into the reactor water, which is caused by abrasion of the Co-based alloy. As a result, the exposure dose to a worker is reduced in a periodical inspection work and so on of a light-water reactor plant, to thus enable an improvement in safety. Then, the abrasion resistance and the like in this embodiment are the same as those in the case where the valve box seat portion 111 and the valve element seat portion 141 are both formed by using the Co-based alloy, and thus this embodiment is good. Further, this embodiment is excellent in erosion resistance.

Furthermore, the sliding characteristics in this embodiment are the same as those in the case where the valve box seat portion 111 and the valve element seat portion 141 are both formed by using the Co-based alloy. Along with this, even in a state where a high contact pressure is added between the valve box seat portion 111 and the valve element seat portion 141, suitable sliding characteristics can be obtained between the valve box seat portion 111 and the valve element seat portion 141.

Besides, an existing valve is simply modified, thereby making it possible to obtain the valve 10 in this embodiment. For example, in the case of the valve box seat portion 111 and the valve element seat portion 141 both formed by using the Co-based alloy, one of the valve box seat portion 111 and the valve element seat portion 141 is replaced with one formed of the build-up material of the Fe-based alloy, and thereby the valve 10 in this embodiment can be obtained.

### [G] Modified embodiment

In the above-described embodiment, the case where the valve box seat portion 111 is formed on the inner surface of the annular member 112 and the annular member 112 is fixed to the inner surface of the valve box 11 has been explained. In this case, it is possible to manufacture the valve 10 easily and efficiently. However, the present invention is not limited to this. For example, it is also possible to directly form the valve box seat portion 111 on the inner surface of the valve box 11 without forming the valve box seat portion 111 on the inner surface of the annular member 112.

In the above-described embodiment, the case where the valve 10 is a sluice valve has been explained, but the present invention is not limited to this. In the same manner as in the above-described embodiment, the valve box seat portions and the valve element seat portions may be configured in valves in other forms such as a globe valve, a check valve, a safety valve, a ball valve, and a butterfly valve.

### EXAMPLE

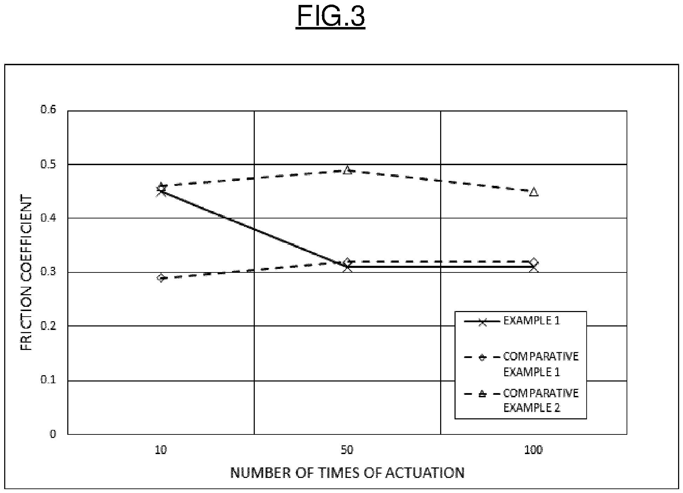

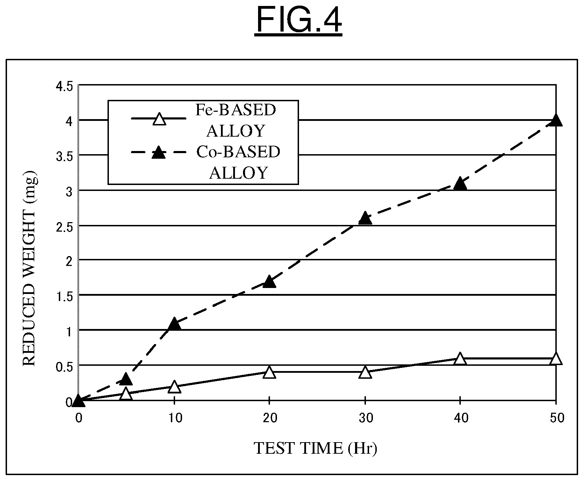

Hereinafter, there will be explained an example and so on while using Table 1, FIG. 3, and FIG. 4.

**[Table 1]**

| | | Valve element seat portion 141 | Valve box seat portion 111 | Difference in vickers hardness | Leakage amount (mL/min) | | |
|---|---|---|---|---|---|---|---|
| | | | | | Number of times of actuation 10 times | Number of times of actuation 50 times | Number of times of actuation 100 times |
| Example 1 | Material | Fe-based alloy | Co alloy | 50HV | 0 | 50 | 50 |
| | Execution method | PTA welding | Gas build-up welding | | | | |
| | Vickers hardness | 380HV | 430HV | | | | |
| Comparative example 1 | Material | Co alloy | | 0HV | 40 | 33 | 53 |
| | Execution method | Gas build-up welding | | | | | |
| | Vickers hardness | 430HV | | | | | |
| Comparative example 2 | Material | Fe alloy | | 0HV | 70 | 180 | 220 |
| | Execution method | PTA welding | | | | | |
| | Vickers hardness | 380HV | | | | | |

### [Example 1]

In Example 1, as illustrated in Table 1, the Fe-based alloy was built-up by PTA welding, to thereby form the valve element seat portion 141. Then, the Co-based alloy was built-up by gas build-up welding, to thereby form the valve box seat portion 111.

In Example 1, the Vickers hardness of the valve element seat portion 141 was 380HV, the Vickers hardness of the valve box seat portion 111 was 430HV, and the difference in the Vickers hardness between the both was 50HV. The above-described Vickers hardnesses are the values measured by a test method in conformity with JIS Z 2244. Here, the measurement of the Vickers hardness was performed under the condition that an applied load of a diamond indenter was 10 kg.

A concrete manufacturing method will be explained below.

### (Valve element seat portion 141)

In Example 1, the Fe-based alloy used for fabricating the valve element seat portion 141 is a material having a composition in mass percentage described below.
- Cr: 25.1%
- Mo: 2.1%
- Si: 3.3%
- C: 1.20%
- Ni: 4.1%
- Mn: 4.4%
- N: 0.13%
- B: 0.002%
- Balance: Fe and inevitable impurities

Then, the above-described Fe-based alloy was melted in a vacuum or under an inert gas environment, and then a powder of the Fe-based alloy was manufactured by a gas atomization method. Here, a powder of the Fe-based alloy having a particle size falling within a range of larger than 80 mesh and smaller than 325 mesh (+80/-325 mesh) was used.

Then, on an S25C (JIS G 4051: 2009) being a steel product, three-layer build-up welding was performed using the powder of the above-described Fe-based alloy by a PTA welding method, and thereby the valve element seat portion 141 for a sluice valve of 150A was fabricated as a sliding test piece.

### (Valve box seat portion 111)

In Example 1, the Co-based alloy used for fabricating the valve box seat portion 111 is a material having a composition in mass percentage described below.
- Cr: 29.9%
- C: 1.12%
- Ni: 2.37% or less
- Fe: 2.27% or less
- W: 4.15%
- Balance: Co and inevitable impurities

Then, the above-described Co-based alloy was melted in a vacuum or under an inert gas environment, and then a powder of the Co-based alloy was manufactured by a gas atomization method. Here, similarly to the case of the powder of the above-described Fe-based alloy, a powder of the Co-based alloy having a particle size falling within a range of larger than 80 mesh and smaller than 325 mesh (+80/-325 mesh) was used.

Then, on an S25C (JIS G 4051: 2009) being a steel product, three-layer build-up welding was performed using the powder of the above-described Co-based alloy by a gas build-up welding method, and thereby the valve box seat portion 111 for the sluice valve of 150A was fabricated as a sliding test piece.

### [Comparative example 1]

In Comparative example 1, as illustrated in Table 1, similarly to the case of Example 1, the Co-based alloy was built-up by gas build-up welding, to thereby form the valve box seat portion 111. In contrast to this, as for the formation of the valve element seat portion 141, the Co-based alloy was built-up by gas build-up welding unlike the case of Example 1. The formation of the valve element seat portion 141 was performed under the same condition as that of the formation of the valve box seat portion 111.

In Comparative example 1, the Vickers hardness of the valve box seat portion 111 and the Vickers hardness of the valve element seat portion 141 were both 430HV and the difference in the Vickers hardness between the both was 0HV.

### [Comparative example 2]

In Comparative example 2, as illustrated in Table 1, similarly to the case of Example 1, the Fe-based alloy was built-up by PTA welding, to thereby form the valve element seat portion 141. In contrast to this, as for the formation of the valve box seat portion 111, the Fe-based alloy was built-up by PTA welding unlike the case of Example 1. The formation of the valve box seat portion 111 was performed under the same condition as that of the formation of the valve element seat portion 141.

In Comparative example 2, the Vickers hardness of the valve box seat portion 111 and the Vickers hardness of the valve element seat portion 141 were both 380HV and the difference in the Vickers hardness between the both was 0HV.

### [Test results]

### (1) Leakage amount (sliding test using a sliding test machine)

As illustrated in Table 1, a leakage amount in each of the examples was measured. Here, a sliding test was executed using a sliding test machine in order to measure the leakage amount. The sliding test was executed by performing an opening and closing operation of the valve a plurality of times under the condition of a contact pressure being 100 MPa in a saturated vapor at a temperature of 288°C.

Table 1 illustrates results of the leakage amount corresponding to the number of times of the opening and closing operation of the valve (the number of times of actuation).

As illustrated in Table 1, the leakage amount in Example 1 was almost equal to or smaller than that in Comparative example 1 and Comparative example 2.

In Example 1, as described above, the valve element seat portion 141 is formed of the build-up material of the Fe-based alloy whose Vickers hardness is 380HV and the valve box seat portion 111 is formed of the build-up material of the Co-based alloy whose Vickers hardness is 430HV. That is, in Example 1, the Vickers hardness of the build-up material of the Co-based alloy is larger than that of the build-up material of the Fe-based alloy, and the difference in the Vickers hardness between the build-up material of the Co-based alloy and the build-up material of the Fe-based alloy is HV50 or more. Therefore, in the sliding test, the Fe-based alloy is abraded more than the Co-based alloy, and thus the Co-based alloy ensures sealing performance. The Fe-based alloy has a body-centered cubic lattice structure, while the Co-based alloy has a hexagonal close-packed lattice structure, so that the Co-based alloy is thought to be more excellent in slidability than the Fe-based alloy. As a result, in Example 1, the amount of the Co-based alloy to be abraded decreases and entrance of the abraded Co-based alloy into the reactor is suppressed. Accordingly, it is possible to reduce the exposure dose due to the Co-based alloy in a periodical inspection work, and thus it is possible to shorten the working time and further improve the safety.

The number of times of actuation of the valve is about five times in one-cycle operation (13 months). The valve is overhauled every 10 years, and thus the number of times of actuation of the opening and closing operation to be performed by the time when the overhaul is performed is about 50 times. Then, as the number of times of actuation to be considered in designing, 100 times, which are twice as many as 50 times, are set. At this time, in Example 1, the leakage amount is 50 mL/min and is constant. In contrast to this, in Comparative example 1 used in a current system, the leakage amount tends to increase according to the number of times of actuation. Therefore, the increase in the leakage amount corresponding to the number of times of actuation is smaller in Example 1 than in Comparative example 1, and thus Example 1 is excellent.

In Comparative example 2, the difference in the Vickers hardness is zero similarly to Comparative example 1. In Comparative example 2, the leakage amount is larger than that in Example 1 and Comparative example 1. In Comparative example 2, when the number of times of the opening and closing operation (the number of times of actuation) is 50 times, the leakage amount is more than triple that in Example 1. Furthermore, when the number of times of the opening and closing operation is 100 times, the leakage amount is more than four times that in Example 1 and Comparative example 1.

### (2) Friction coefficient

FIG. 3 is a view illustrating measurement results of a friction coefficient after the sliding test in the example and the comparative examples. In FIG. 3, the horizon axis indicates the number of times of the opening and closing operation of the valve (the number of times of actuation) and the vertical axis indicates the friction coefficient. Here, the friction coefficient to be measured when the valve box seat portion 111 and the valve element seat portion 141 in each of the examples are slid relatively is illustrated.

As illustrated in FIG. 3, the relation between the number of times of the opening and closing operation of the valve (the number of times of actuation) and the friction coefficient in Example 1 becomes equal to that in Comparative example 1 when the number of times of actuation is 50 times or more. When the number of times of actuation is 10 times, the friction coefficient, which is 1.5 times larger than that in Comparative example 1, is measured. However, the measured friction coefficient is within a friction coefficient range that is considered in designing, and thus it is not necessary to change the design of the valve driving device.

### (3) Surface roughness Ra

After the above-described sliding test was executed in each of the examples, the valve was disassembled, and each arithmetic average surface roughness Ra (JIS B 0601-2001) of sliding surfaces of the valve box seat portion 111 and the valve element seat portion 141 was measured.

In Example 1, results of the arithmetic average surface roughness Ra were as follows.
- Ra of the Fe-based alloy forming the valve element seat portion 141: 0.37 µm or more and 1.10 µm or less
- Ra of the Co-based alloy forming the valve box seat portion 111: 0.07 µm or more and 0.26 µm or less

In Comparative example 1, results of the arithmetic average surface roughness Ra were as follows.
- Ra of the Co-based alloy forming the valve element seat portion 141: 0.15 µm or more and 0.41 µm or less
- Ra of the Co-based alloy forming the valve box seat portion 111: 0.17 µm or more and 0.41 µm or less

The results of the above-described arithmetic average surface roughness Ra reveal that maintenance of Example 1 is enabled similarly to Comparative example 1.

Separately from the above-described sliding test, a sliding test was performed on a sluice valve of 600A and a sluice valve of 80A. Results of the respective sliding tests are explained sequentially.

### [Sliding test on the sluice valve of 600A]

The sliding test was executed on the sluice valve of 600A in which the valve element seat portions 141 and the valve box seat portions 111 were formed similarly to the case of Example 1. The sliding test was executed by performing the opening and closing operation of the valve 50 times under the condition of a differential pressure being 7.13 MPa in a saturated vapor at a temperature of 288°C.

After the above-described sliding test, a valve seat leakage test was performed, to thereby confirm the presence or absence of leakage. The valve seat leakage test was executed by room temperature water under the condition of a test pressure being 8.62 MPa and a retention time being three minutes. As a result, no leakage was confirmed.

### [Sliding test on the sluice valve of 80A]

The sluice valve of 80A in which the valve element seat portions 141 and the valve box seat portions 111 were formed similarly to the case of Example 1 was placed in a pilot plant for 1.5 years. Then, the sliding test was further executed on the sluice valve. The sliding test was executed under the condition of a differential pressure being 11.5 MPa in a vapor at a temperature of 485°C. This condition satisfies system conditions in a pressurized water plant among atomic power plants.

After the above-described sliding test, the sluice valve was detached from the pilot plant and the valve seat leakage test was executed on the sluice valve, to thereby confirm the presence or absence of leakage. The valve seat leakage test was executed by room temperature water under the condition of a test pressure being 28.5 MPa and a retention time being one minute. As a result, no leakage was confirmed.

Further, as a result that an appearance inspection was performed, it was confirmed that no defect such as "galling" occurred in the seat portion. Furthermore, as a result that a liquid osmotic pressure inspection was performed, no PT (Penetrant Testing) flaw indication or cracking was confirmed.

After the above-described sliding test, results of the arithmetic average surface roughness Ra were as follows. These results reveal that a large amount of the Fe-based alloy was abraded, thus making it possible to limit the amount of Co to enter the reactor.
- Ra of the Fe-based alloy forming the valve element seat portion 141: 1.38 µm
- Ra of the Co-based alloy forming the valve box seat portion 111: 0.40 µm

### [Erosion test]

In an erosion test, the Fe-based alloy was built-up by PTA welding under the same condition as that in Example 1, to thereby fabricate a test piece, and then machining was performed on the test piece, to thereby fabricate an erosion test piece 1. Further, the Co-based alloy was built-up by a gas build-up welding method under the same condition as that in Example 1, to thereby fabricate a test piece, and then machining was performed on the test piece, to thereby fabricate an erosion test piece 2.

Then, the erosion test was executed on each of the erosion test piece 1 of the Fe-based alloy and the erosion test piece 2 of the Co-based alloy. In the erosion test, a high-pressure running water was made to collide with each of the test pieces to cause erosion. Concretely, the erosion test was executed under the following test condition.
- Test fluid: room temperature water
- Differential pressure: 24.5 MPa
- Flow velocity: 216 m/s
- Test time: 50 hr

FIG. 4 is a view illustrating results of the erosion test. In FIG. 4, the horizontal axis indicates a test time (Hr) for which the erosion test was executed, and the vertical axis indicates, of each of the test pieces, a weight reduced from the weight before the test (reduced weight).

As illustrated in FIG. 4, the weight reduced from the weight before the test (reduced weight) of the Fe-based alloy used in Example 1 and the like is higher than that of the Co-based alloy used in Example 1 and the like.

### <Others>

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A valve, comprising:
a valve box in which valve box seat portion is provided; and
a valve element on which valve element seat portion is provided, wherein
one of the valve box seat portion and the valve element seat portion is formed of a build-up material of a Co-based alloy,
the other of the valve box seat portion and the valve element seat portion is formed of a build-up material of an Fe-based alloy, and
a Vickers hardness of the build-up material of the Co-based alloy is larger than a Vickers hardness of the build-up material of the Fe-based alloy and a difference in the Vickers hardness between the build-up material of the Co-based alloy and the build-up material of the Fe-based alloy is HV50 or more.

2. The valve according to claim 1, wherein
the Vickers hardness of the build-up material of the Fe-based alloy is HV380 or more and HV400 or less.

3. The valve according to claim 1 or 2 to be used in an atomic power plant.

4. A plant configured using the valve according to claim 1 or 2.
